(19) **Europäisches Patentamt**
**European Patent Office**
**Office européen des brevets**

(11) **EP 1 418 754 B1**

(12) **EUROPEAN PATENT SPECIFICATION**

(45) Date of publication and mention
of the grant of the patent:
**25.07.2012 Bulletin 2012/30**

(51) Int Cl.:
**H04N 5/44** *(2011.01)*

(21) Application number: **03022871.2**

(22) Date of filing: **08.10.2003**

(54) **Progressive conversion of interlaced video based on coded bitstream analysis**

Auf kodierter Datenströmanalyse basierte Progressivumwandlung von einem Zeilensprungvideo

Conversion progressive de vidéo entrelacée basée sur l'analyse du flux binaire

(84) Designated Contracting States:
**DE FR GB**

(30) Priority: **08.10.2002 US 416832 P**
**20.05.2003 US 441491**

(43) Date of publication of application:
**12.05.2004 Bulletin 2004/20**

(73) Proprietor: **Broadcom Corporation**
**Irvine, CA 92617 (US)**

(72) Inventors:
• **MacInnis, Alexander**
**94022 Los Altos, CA (US)**

• **Alvarez, Roberto Jose**
**94087 Sunnyvale, CA (US)**
• **Chen, Sherman Xuemin**
**92129 San Diego**
**California (US)**

(74) Representative: **Jehle, Volker Armin et al**
**Bosch Jehle Patentanwaltsgesellschaft mbH**
**Flüggenstrasse 13**
**80639 München (DE)**

(56) References cited:
**EP-A- 1 164 792      EP-A- 1 211 644**
**US-B1- 6 269 484      US-B1- 6 348 949**

**Description**

BACKGROUND OF THE INVENTION

The present application is directed to displaying video content, and more particularly, to displaying interlaced video content on progressive displays.

The interlacing process involves vertical-temporal subsampling to reduce bandwidth while producing consumer-quality pictures. Frames in a video sequence are displayed in two fields at two distinct time instances. All odd-numbered lines in the frame are displayed at one discrete time, and all even numbered lines in the frame are displayed at another discrete time. Both the National Television Standards Committee (NTSC) and Phase Alternate Lining (PAL) use interlacing.

In some cases, the interlace process makes it impossible to distinguish high vertical detail from interfield motion, or vice versa. The vertical-temporal sampling characteristics of the interlace system can be represented in a quincunx sampling matrix, where it is possible to see the spatial-temporal aliasing that leads to the mixing of vertical detail with temporal detail.

In contrast to interlaced frame sampling, progressive displays present each of the lines in a frame at the same discrete time instance. Progressive display units are becoming more and more common. Most computer monitors are progressive display devices. Additionally, many television sets are capable of both interlaced and progressive displaying because more of the content displayed on television screens is from a progressive video sequence. For example, most motion pictures on ' Digital Versatile Discs (DVDs) are a progressive scan video sequence. Therefore, television sets can be equipped to display the DVD content as a progressive sequence. Additionally, many of the proposed high-definition television standards (HDTV) involve both progressive and interlaced displaying.

An inherent problem exists when displaying a video sequence which was recorded as an interlaced video sequence on a progressive display. Most proposed solutions involve processing and analyzing the video signal in both the spatial and temporal domains, and producing a converted progressive picture based on the interlaced video source. Various methods for approaching the problem involve the utilization of vertical filters, vertical-temporal filters, adaptive two-dimensional and temporal filters, motion adaptive spatio-temporal filters, and motion-compensated spatio-temporal filters. Very complex deinterlacers would analyze the frame information in the spatial and temporal domains, sometimes storing several consecutive fields of video in memory in order to analyze the characteristics of the video sequence and make decisions on a pixel-by-pixel basis as to how to display the video information in a progressive display. Very simple deinterlacers would perform only spatial filtering regardless of motion in the sequence. However, the foregoing look at actual picture data, and overlook the origin of the picture data, especially when the source is a compressed bit stream.

US 6,348,949 B1 discloses deinterlacing a video signal using a motion detector. In one example, a divider, a comparator, and an interpolator deinterlace a video signal and reduce combing artifacts.

US 6,269,484 B1 discloses a de-interlacing device having a decoder that extracts decoding motion vector data for use in de-interlacing of decompressed picture data, from an MPEG-2 type compressed data stream containing interlaced decompressed picture data made up of macroblock of data.

EP 1 211 644 A1 discloses a method describing motion activity in a video sequence. A motion activity matrix is determined for the video sequence. A threshold for the motion activity matrix is determined. Connected regions of motion vectors at least equal to the threshold are identified and measured for size. A histogram of the distribution of the sizes of the connected areas is constructed for the entire video sequence. The histogram is normalized to characterize the spatial distribution of the video sequence in a motion activity descriptor.

P 1 164 792 A2 discloses a format converter which performs frame rate conversion and de-interlacing using a bidirectional motion vector and a method thereof. The method includes the steps of (a) estimating a bidirectional motion vector between the current frame and the previous frame from a frame to be interpolated; setting the motion vector of a neighboring block that has the minimum error distortion, among motions vectors estimated in the step (a), as the motion vector of the current block; and (c) forming a frame to be interpolated with the motion vector set in the step (b).

Further limitations and disadvantages of conventional and traditional approaches will become apparent to one of skill in the art, through comparison of such systems with embodiments of the present invention as set forth in the remainder of the present application with reference to the drawings.

BRIEF SUMMARY OF THE INVENTION

A system, method, and apparatus for guiding a deinterlacer are presented herein. A deinterlacing coefficient is provided to a deinterlacer based on analysis of the attributes of the video sequence. The deinterlacer can then select a deinterlacing scheme based on the deinterlacing coefficient which best optimizes system resources while minimizing distortion.

In one embodiment, the video sequence is encoded as an MPEG-2 bitstream, and a deinterlacing coefficient is provided for deinterlacing each macroblock of the video sequence. The deinterlacing coefficient for the macroblock is a function of the type of the macroblock, the type of reference macroblock from which the macroblock was predicted, motion vectors associated with the macroblock, and motion vectors associated with neighboring macroblocks. Since most, if not all, of the foregoing parameters are calculated and encoded into the MPEG-2 bitstream prior to transmission over a communication channel, a significant amount of calculation at the receiver is advantageously avoided.

According to an aspect of the invention, a method for guiding a deinterlacer is provided, said method comprising:

examining motion vector information for a portion of a field;
calculating a parameter for the portion of the field, wherein the parameter is a function of the motion vector information, and wherein the parameter is indicative of interfield motion for the portion of the field; and
providing the parameter to a deinterlacer wherein the deinterlacer selects a scheme for deinterlacing the portion of the field based on the parameter.

Advantageously, calculating the parameter further comprises:

computing a magnitude for the motion vector information for the portion of the field.

Advantageously, calculating the parameter further comprises:

calculating a linear combination of the magnitude for the motion vector information for the portion of the field and at least one parameter which is indicative of interfield motion for at least one other portion of the frame.

Advantageously, calculating the parameter further comprises:

selecting a median from the magnitude for the motion vector information for the portion of the field and at least one parameter which is indicative of interfield motion for at least one other portion of the frame.

Advantageously, calculating the parameter further comprises:

increasing the parameter wherein the portion of the field comprises a portion of a top field, and wherein the portion of the field is predicted from a portion of a reference bottom field; and
increasing the parameter wherein the portion of the field comprises a portion of a bottom field, and wherein the portion of the field is predicted from a portion of a reference top field.

Advantageously, examining motion vector information further comprises:

examining motion vector information calculated prior to transmission of the field over a communication channel.

According to another aspect of the invention, a method for guiding a deinterlacer is provided, said method comprising:

detecting whether a portion of a field is from an intrapicture;
setting a parameter to a first predetermined value, wherein the portion of the field is intraframe coded;
setting the parameter to a second predetermined value, wherein the portion of the field is interfield coded; and
providing the parameter to a deinterlacer, wherein the deinterlacer deinterlaces the portion of the field based on the parameter.

According to another aspect of the invention, a method for guiding a deinterlacer is provided, said method comprising:

detecting whether a video sequence comprises repeated fields and fields from progressive frames;
providing a parameter to a deinterlacer for a portion of a repeated field, wherein the parameter is a function of motion vector information associated with the portion of the repeated field, and wherein the deinterlacer deinterlaces the portion of the repeated field based on the parameter; and
providing a parameter for a portion of a field from a progressive frame, wherein the parameter indicates no interfield motion for the portion of the field from the progressive frame.

According to another aspect of the invention, a receiver for deinterlacing an input video sequence comprising a plurality of fields is provided, said receiver comprising:

a processor for providing a parameter for a portion of one of said fields, said parameter indicative of interfield motion; and

a deinterlacer for selecting a deinterlacing scheme from a plurality of deinterlacing schemes based on said parameter and deinterlacing the portion of the field using the deinterlacing.

Advantageously, the receiver further comprises:

a decoder for receiving the portion of the field, and providing at least one motion vector associated with the portion of the field to the processor; and

wherein the processor computes a magnitude for the at least one motion vector.

Advantageously, the decoder provides at least one motion vector associated with at least one other portion of the field wherein the processor computes at least one magnitude for at least one motion vector associated with the at least one other portion of the field.

Advantageously, the deinterlacer selects a first deinterlacing scheme wherein the parameter exceeds a predetermined threshold and selects a second deinterlacing scheme wherein the predetermined threshold exceeds the parameter.

Advantageously, the first scheme comprises creating a portion of a progressive frame comprising a first plurality of lines and a second plurality of lines, wherein the first plurality of lines comprise lines from the portion of the field and wherein the second plurality of lines comprise lines from a portion of another of said fields, and wherein the second interlacing scheme comprises generating the portion of the progressive frame wherein the first plurality of lines comprise the portion of the field, and wherein the second plurality of lines are interpolated from the first plurality of lines.

According to another aspect of the invention, a circuit for deinterlacing an input video sequence comprising a plurality of fields is provided, said circuit comprising:

a processor;

a deinterlacer connected to the processor, wherein the deinterlacer receives a parameter indicative of interfield motion for a portion of a field from the processor and selects a deinterlacing scheme from a plurality of deinterlacing schemes for portion of the field based on the parameter; and

a memory connected to the processor, said memory storing a plurality of instructions executable by the processor, wherein the instructions comprise means for calculating the parameter.

Advantageously, the circuit further comprises:

a decoder connected to the processor, wherein the decoder receives the portion of the field, and provides at least one motion vector associated with the portion of the field to the processor; and

wherein the means for calculating the parameter further comprises means for computing a magnitude for the at least one motion vector associated with the portion of the field.

Advantageously, the means for calculating the parameter comprises means for computing a linear combination of the magnitude of the at least one motion vector and parameters indicative of interfield motion of other portions of the field.

Advantageously, the means for calculating the parameter comprises means for selecting a median of the magnitude of the at least one motion vector associated with the portion of the field and the parameters indicative of interfield motion of other portions of the field.

Advantageously, the means for calculating the parameter further comprises means for:

increasing the parameter wherein the portion of the field comprises a portion of a top field, and wherein the portion of the field is predicted from a portion of a reference bottom field; and

increasing the parameter wherein the portion of the field comprises a portion of a bottom field, and wherein the portion of the field is predicted from a portion of a reference top field.

Advantageously, the parameter is a function of motion vector information calculated prior to transmission of the field over a communication channel.

These and other advantages and novel features of the present invention, as well as details of an illustrated embodiment thereof, will be more fully understood from the following description and drawings.

BRIEF DESCRIPTION OF SEVERAL VIEWS OF THE DRAWINGS

FIGURE 1 is a block diagram of an exemplary transmission system;

FIGURE 2 is a block diagram of an exemplary video sequence generation;

FIGURE 3 is a block diagram of the MPEG-2 packet hierarchy;

FIGURE 4 is a block diagram of an exemplary receiver in accordance with the claimed invention;

FIGURE 5 is a block diagram of exemplary deinterlacing schemes;

FIGURE 6 is a flow diagram describing selection of a deinterlacing scheme in accordance with the claimed invention; and

FIGURE 7 is a block diagram describing a 3:2 pull down process.

DETAILED DESCRIPTION OF THE INVENTION

Although the foregoing embodiments are described in the context of the MPEG-2 standard, it should be noted that the present application is not limited to the MPEG-2 standard and is applicable in other contexts where interlaced video is to be displayed on a progressive display.

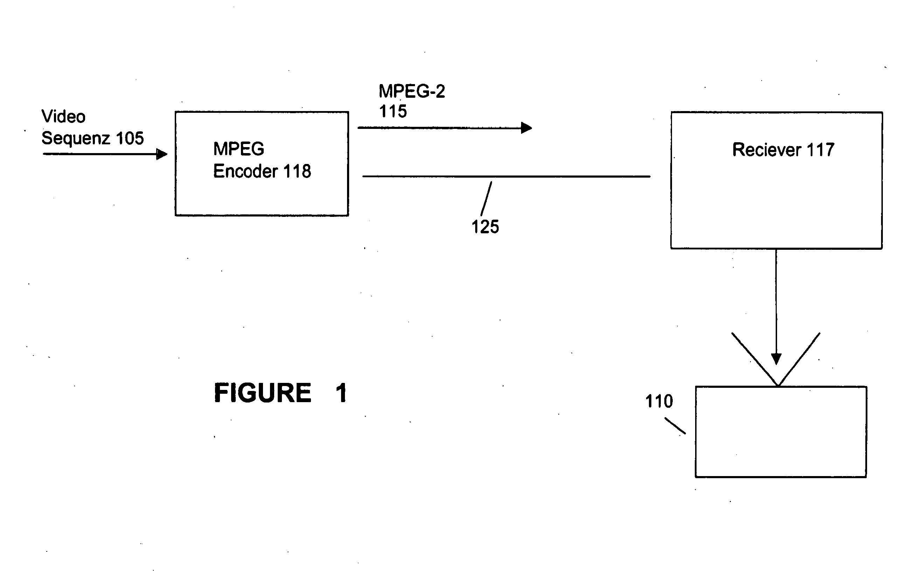

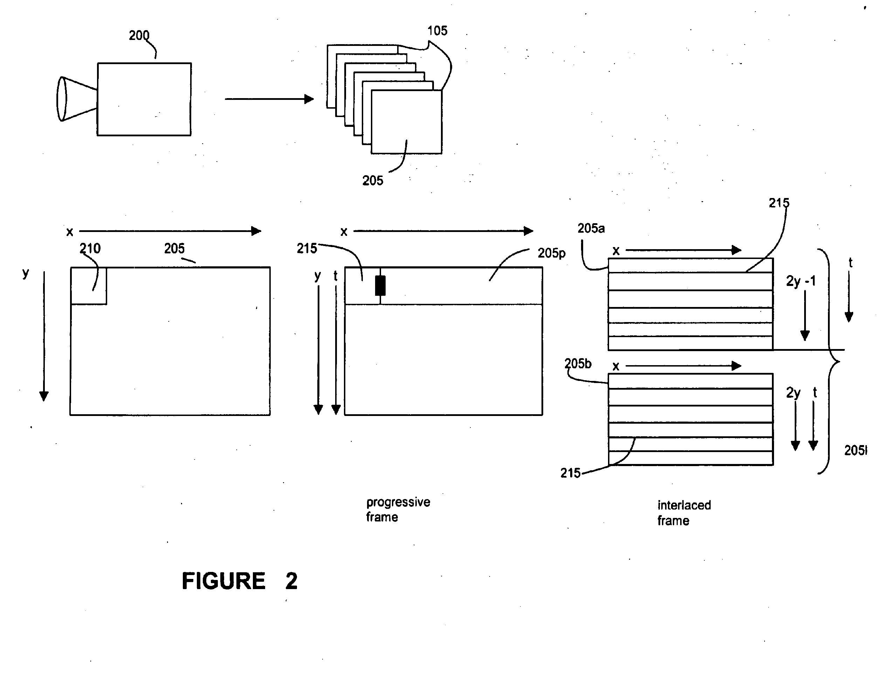

Referring now to **FIGURE 1**, there is illustrated a block diagram of an exemplary transmission system for providing a video sequence 105 to a progressive display unit 110 over a communication channel 125. **FIGURE 2** is a block diagram of an exemplary video sequence 105. A video sequence 105 is generated by a video camera 200 and represents images captured by the camera 200 at specific time intervals. A frame 205 represents each image. The frames 205 comprise two-dimensional grids of pixels 210, wherein each pixel in the grid corresponds to a particular spatial location of an image captured by the camera. Each pixel 210 stores a color value describing the spatial location corresponding thereto. Accordingly, each pixel 210 is associated with two spatial parameters (x,y) as well as a time (t) parameter associated with the frame.

The pixels 210 are scanned by a video camera 200 in serial fashion. A progressive camera scans each row 215 of a frame 205 from left to right in sequential order. An interlaced camera, scans the rows 215 of a frame 205 in odd/even alternating order. In other words, the odd numbered lines are scanned from left to right, followed by the even numbered lines. The partial images of the odd number lines shall be referred to as top fields 205a, while the partial images of the even numbered lines shall be referred to as bottom fields 205b.

In a progressive frame 205p, temporally neighboring lines 215 are also spatially neighboring lines. In an interlaced frame 205i, temporally neighboring lines 215 are not spatial neighbors. Progressive display units 110 display a video sequence 105 in a similar manner as the progressive camera 200 scans the video sequence 105, thereby displaying progressive video sequences in synchronization. However, a progressive display cannot properly display an interlaced video sequence 105 without processing or adapting the interlaced video sequence 105 for display on the progressive display unit 110.

An exemplary standard for display of the video sequence 105 is the ITU-R Recommendation Bt.656 which provides for 30 frames of 720x480 pixels per second. The foregoing results in a display rate of approximately 165 Mbps. The bandwidth requirements of the communication channel 125 for transmission of the video sequence 105 in real time are extremely high. Accordingly, a number of data compression standards have been promulgated. One of the most popular standards was developed by the Motion Picture Experts Group (MPEG), and is known as MPEG-2. The MPEG-2 video standard is detailed in ITU-T Recommendation H.262 (1995) | ISO/IEC 13818-2:1996, *Information Technology - Generic Coding of Moving Pictures and Associated Audio Information - Video* which is hereby incorporated by reference for all purposes. Referring again to **FIGURE 1**, the video sequence 105 is received by an encoder 118. The encoder 118 encodes the video sequence 105 pursuant to the MPEG-2 standard.

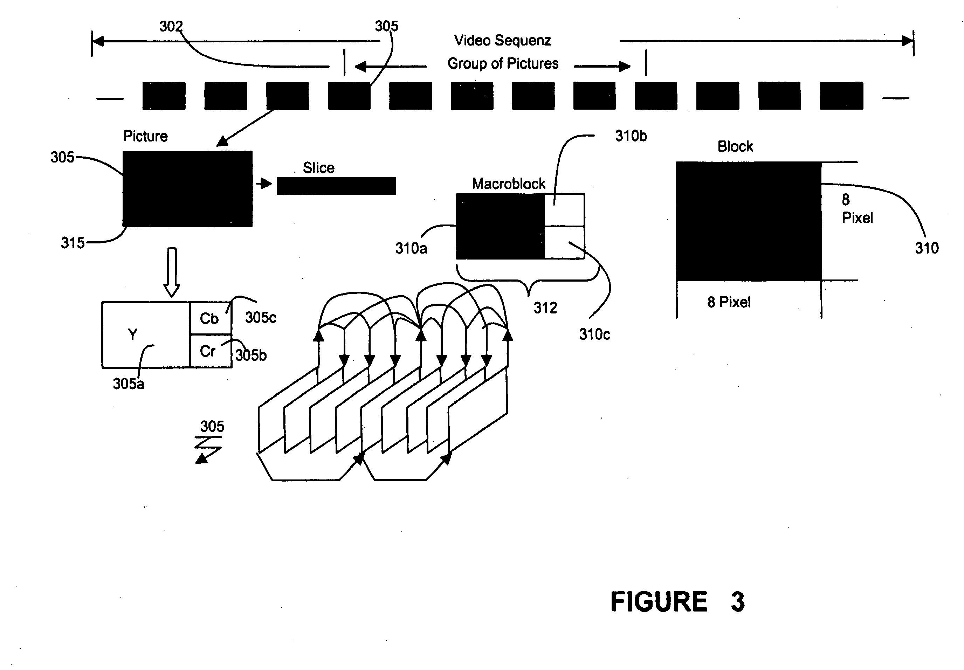

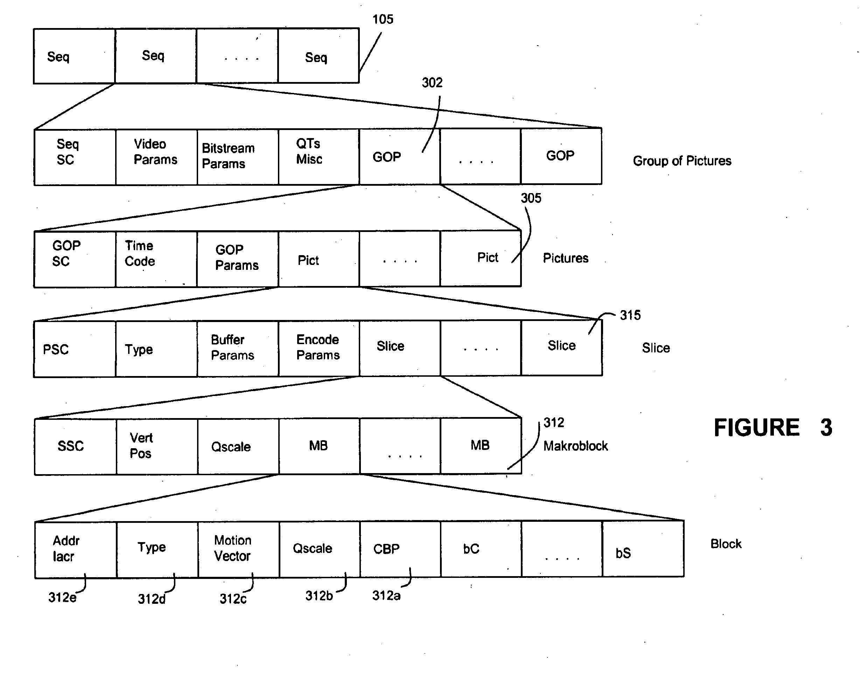

Pursuant to the MPEG standard, the video sequence is represented by a bitstream of data packets, known as MPEG-2 packets 115. The MPEG packets 115 include compressed data representing a series of frames 205 forming a video sequence 105. Referring now to **FIGURE 3**, there is illustrated a block diagram of the MPEG-2 video stream hierarchy. A video sequence 105 includes a number of groups 302, wherein each group 302 comprises an encoded representation of a series of pictures 305.

Each picture 305 is associated with three matrices representing luminance (Y) 305a and two chrominance (Cb and Cr) values, 305b, 305c. The Y matrix 305a has an even number of rows and columns while the Cb and Cr matrices 305b, 305c are one-half the size of the Y matrix in each direction (horizontal and vertical). Each matrix 305a, 305b, 305c is further divided into 8 x 8 segments known as blocks 310. Each block 310b, 310c from the chrominance matrices 305b, 305c is associated with four blocks 310a from the luminance matrix 305a because the luminance matrix 305a is twice the size of the chrominance matrices in both directions. The blocks 310b, 310c from the chrominance matrices 305b, 305c and the associated four blocks 310a from the luminance matrix 305a together form a macroblock 312.

MPEG-2 uses one of two pictures structures for encoding an interlaced video sequence. In the frame structure, lines of the two fields alternate and the two fields are coded together. One picture header is used for two fields. In the field structure, the two fields of a frame may be coded independently of each other, and the odd fields and even fields are coded in alternating order. Each of the two fields has its own picture header.

A picture 305 is divided into slices 315, wherein each slice 315 includes any number of encoded contiguous macroblocks 310 from left to right and top to bottom order. Slices 315 are important in the handling of errors. If a bit stream contains an error, a slice 315 can be skipped allowing better error concealment.

As noted above, the macroblocks 312 comprise blocks 310 from the chrominance matrices 305b, 305c and the luminance matrix 305a. The blocks 310 are the most basic units of MPEG-2 encoding. Each block 310 from the chrominance matrices 305b, 305c and the associated four block from the luminance matrix 305a are encoded, b0......b5, and together form the data portion of a macroblock 312. The macroblock 312 also includes a number of control parameters including (Coded Block Pattern) CBP 312a, Qscale 312b, motion vector 312c, type 312d, and address increment 312e. The CBP 312a indicates the number of coded blocks in a macroblock. The Qscale 312b indicates the quantization scale. The motion vector 312c is used for temporal encoding. The type 312d indicates the method of coding and content of the macroblock according to the MPEG-2 specification. The address increment 312e indicates the difference between the macroblock address and the previous macroblock address.

The macroblocks 312 are encoded using various algorithms. The algorithms take advantage of both spatial redundancy and/or temporal redundancy. The algorithms taking advantage of spatial redundancy utilize discrete cosine transformation (DCT), quantization, and run-length encoding to reduce the amount of data required to code each macroblock 312. Pictures 305 with macroblocks 312 which are coded using only spatial redundancy are known as Intra Pictures 305I (or I-pictures).

The algorithms taking advantage of temporal redundancy use motion compensation based prediction. With pictures which are closely related, it is possible to accurately represent or "predict" the data of one picture based on the data of a reference picture, provided the translation is estimated. Pictures 305 can be considered as snapshots in time of moving objects. Therefore, a portion of one picture 305 can be associated with a different portion of another picture 305.

Pursuant to the MPEG-2 Standard, a macroblock 315 of one picture is predicted by searching macroblocks 315 of reference picture(s) 305. The difference between the macroblocks 315 is the prediction error. The prediction error can be encoded in the DCT domain using a small number of bits for representation. Two-dimensional motion vector(s) represents the vertical and horizontal displacement between the macroblock 315 and the macroblock(s) 315 of the reference picture(s). Accordingly, the macroblock 315 can be encoded by using the prediction error in the DCT domain at b0......b5, and the motion vector(s) at 315c describing the displacement of the macroblock(s) of the reference picture (s) 305.

Pictures 305 with macroblocks 315 coded using temporal redundancy with respect to earlier pictures 305 of the video sequence are known as predicted pictures 305P (or P-pictures). Pictures 305 with macroblocks 315 coded using temporal redundancy with respect to earlier and later pictures 305 of the video sequence are known as bi-directional pictures 305B (or B-pictures).

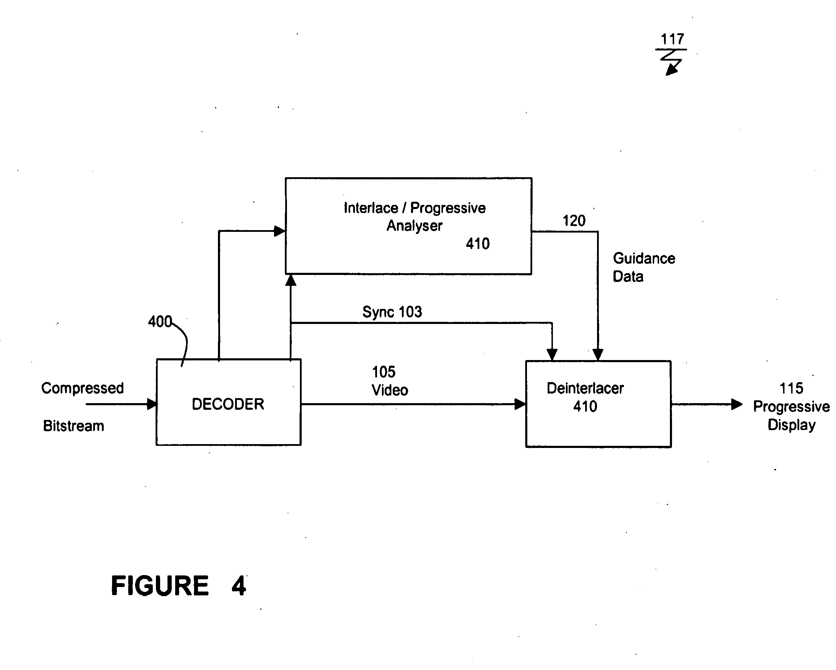

Referring again to **FIGURE 1**, the MPEG Encoder 118 transmits the MPEG packets 115 over a communication channel 125 to the receiver 117. The receiver 117 decodes the MPEG packets 115 for display on a progressive screen display 130. **FIGURE 4** is a block diagram of an exemplary receiver 117. The receiver 117 includes a decoder 400, an interlace/progressive analyzer (IPA) 405, and a deinterlacer 410. The decoder 400 receives the MPEG packets 115 and decodes or decompresses the MPEG packets 115 to generate a high quality reproduction 105' of the original video sequence 105.

The reproduced video sequence 105' is converted from the interlace domain to the progressive domain by the deinterlacer 410, if the video sequence 105' represents interlaced information. The deinterlacer 410 can deinterlace an interlaced video sequence 105' in a number of ways.

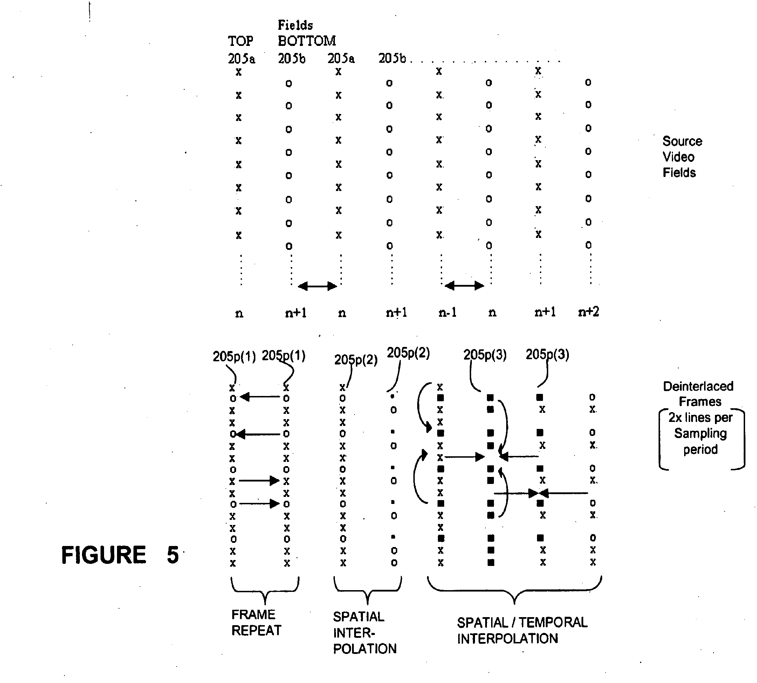

Referring now to **FIGURE 5**, there are illustrated exemplary schemes for deinterlacing an interlaced video sequence. An exemplary video sequence 105' of interlaced video contains top fields 205a of odd numbered lines, X, and bottom fields 205b of even numbered lines, O, at 1/60 second time intervals.

The top fields 105a and bottom fields 205b are deinterlaced to form progressive frames 205p sampled at 1/60 second. In one scheme, known as the frame repeat scheme, progressive frame 205p(n) at time interval n, is generated from top field 205a at time n, by simply filling in the even-numbered lines O of the bottom field 205b at time n+1. The progressive frame 205p(n+1) at time interval n+1 is generated from the bottom field 205b at time n+1, by simply filling in the odd-numbered lines X from the top frame at time, n. It is noted that the progressive frame 205p(1) at times n and n+1 are identical.

In another deinterlacing scheme, a progressive frame 205p(2) is generated from a top field 205a, by spatially interpolating the even-numbered lines O based on the odd-numbered lines X. Various mathematical formulas can take averages of neighboring lines, or weighted averages of the odd-numbered lines surrounding the even-numbered lines. Similarly, a progressive frame 205p(2) is generated from a bottom field 205b by spatially interpolating the odd-numbered lines X from the even numbered lines O.

In another deinterlacing scheme, a progressive frame 205p(3) at time n is generated from a bottom field 205b, by spatially interpolating the odd-numbered lines X from the even-numbered lines O of bottom field 205b, and temporally interpolating the odd-numbered lines X from the top fields 205a immediately preceding and following the bottom field, e.g., top fields 205a at times n-1 and n+1. Similarly, a progressive frame 205(p)(3) is generated from a top field 205b at time n+1, by spatially and temporally interpolating the even-numbered lines O from the odd-numbered lines X, as well as from the even numbered lines O of bottom fields 205b immediately preceding and following the top field 205a, e.g., at times n and n+2.

Each deinterlacing scheme has advantages and disadvantages, based on the trade-off between accuracy and computational requirements. For example, the repeating frame scheme is computationally simple. However, the progressive frames 205p include odd numbered lines X sampled at one time interval, e.g., n, and even numbered lines O sampled at another time interval, e.g., n+1. Motion occurring between the times when the top fields 205a and bottom fields 205b were sampled, e.g., between time n and n+1, known as interfield motion, can cause noticeable distortion. For example, a fast moving object will appear to have "jagged" edges in the resulting progressive frame.

A scheme using spatial interpolation can avoid the foregoing distortion. However, spatial interpolation requires a significant receiver 117 computation resources. Additionally, spatial interpolation can also distort fine vertical detail in the pictures. Fine vertical detail in an image may appear smoothed or "blurry".

Schemes using both temporal and spatial interpolation can produce very accurate progressive frames 205p (3). However, spatial and temporal interpolation utilizes the highest amount of receiver's 117 computational resources. Additionally, temporal interpolation also requires a great deal of receiver 117 memory for buffering each of the fields 205a, 205b from which temporal interpolation is based.

It is beneficial to optimize utilization of the receiver 117 resources and the quality of the progressive frame 205p. Utilization of the receiver 117 resources and the quality of the progressive frame 205p are optimized by selection of the deinterlacing scheme based on the syntactic information in the MPEG-2 packets 115.

The Interlaced/Progressive Analyzer 405 examines the header information from each MPEG-2 packet 115 via an interface to the decoder 400 and generates an associated deinterlacing coefficient. The deinterlacing coefficient generated by the Interlaced/Progressive Analyzer 405 is indicative of the suitability of the various deinterlacing schemes for deinterlacing the MPEG-2 packet 115 associated therewith.

The deinterlacing coefficient is based on several qualities of each macroblock 312 within the MPEG-2 packet 115, including motion vectors 312c for the macroblock 312 and neighboring macroblock 312, the type of picture 305 comprising the macroblock 312, whether the picture 305 comprising the macroblock 312 was field coded or frame coded, and the type of reference picture 305 containing the macroblock 312 from which the macroblock associated with the MPEG-2 packet was predicted. The deinterlacing coefficient can be generated with minimal computation at the receiver 117 because most if not all of the foregoing information is already encoded in the macroblock 312 prior to transmission. For example, the motion vector information is encoded in the motion vector field 312c.

The deinterlacing coefficient is provided to the deinterlacer. The deinterlacer uses the deinterlacing coefficient to select an appropriate deinterlacing scheme for deinterlacing the macroblock associated with the deinterlacer. For example, the various deinterlacing schemes can be mapped to various ranges of the deinterlacing coefficient. The deinterlacer selects the deinterlacing scheme for a macroblock mapped to the value of the deinterlacing coefficient associated with the macroblock.

The receiver 117 as described herein may be implemented as a board level product, as a single chip, application specific integrated circuit (ASIC), or with varying levels of the receiver 117 integrated on a single chip with other portions of the system as separate components. The degree of integration of the system will primarily be determined by speed of incoming MPEG packets, and cost considerations. Because of the sophisticated nature of modern processors, it is possible to implement the IPA 405 using a commercially available processor and memory storing instructions executable by the processor. The IPA 405 can be external to an ASIC. Alternatively, the IPA 405 can be implemented as an ASIC core or logic block.

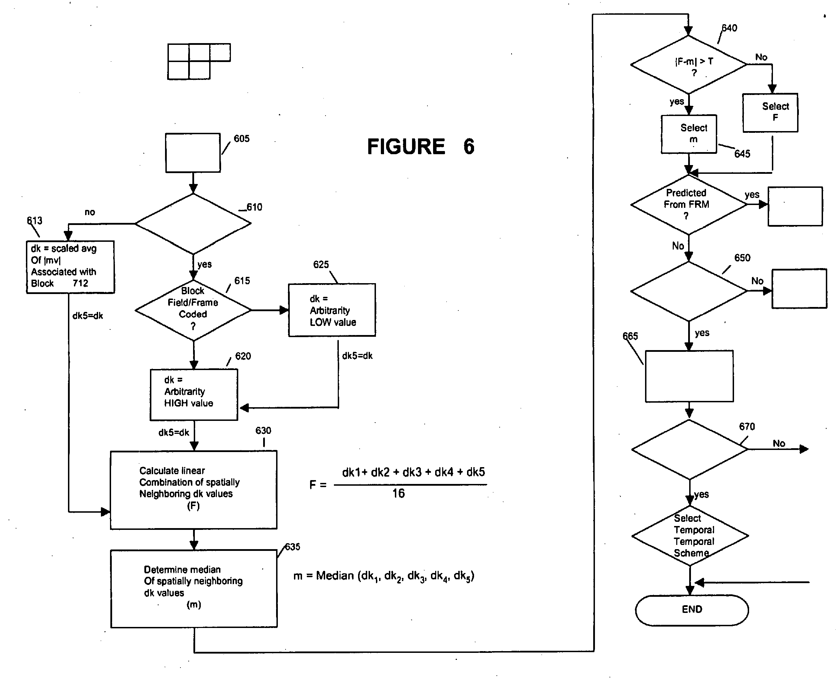

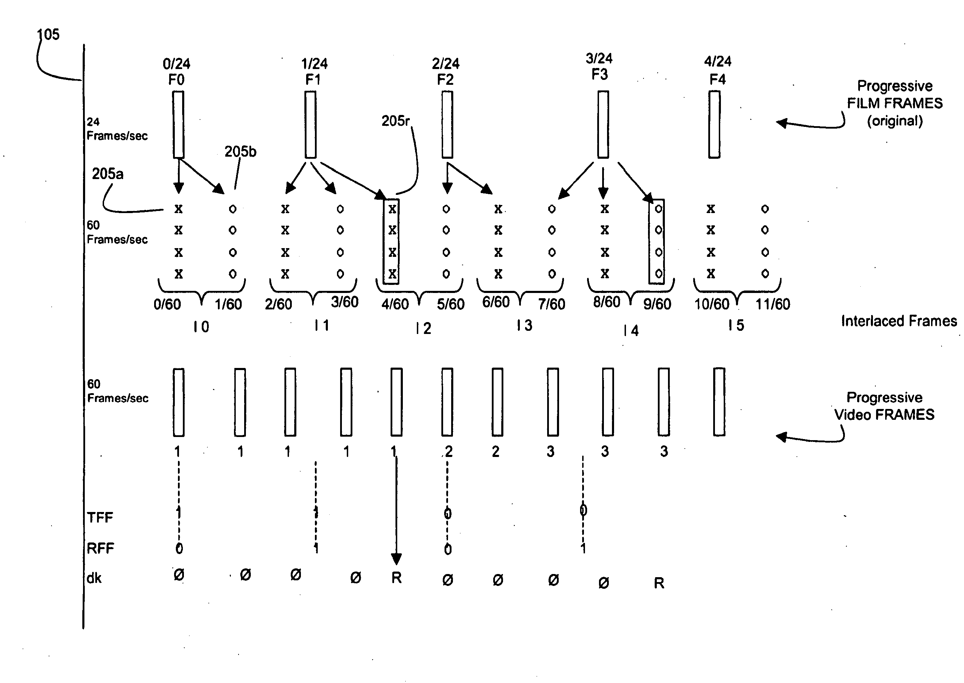

Referring now to **FIGURE 6**, there is illustrated a flow diagram for calculating a deinterlacing coefficient and selecting a deinterlacing scheme for a macroblock. The deinterlacing coefficient is initially set as a scaled average of all motion vectors for a macroblock 312. At 605, the IPA 405 examines the motion vector field 312c of the macroblock 312 and calculates the average magnitude of all motion vectors 312c stored therein. The starting value for the deinterlacing coefficient dk is based on a scaled average of the motion vectors associated with the current block 312. The scaled average magnitude of all of the motion vectors 312c is represented by:

$$dk = g\sum_{K=0} |mv_k|/n$$

It is noted that in some cases, motion vectors are not always indicative of interfield motion. For example, although a portion of a predicted macroblock may be best represented by another portion of a reference macroblock, that portion of the reference macroblock might represent another object, as opposed to the same object spatially shifted over time. A motion vector should indicate the spatial displacement of objects; however, this may not be the case in interlaced systems due to the nature of the vertical/temporal sampling process.

The foregoing is most likely to occur with a low encoding rate for each field/frame and least likely to occur with a higher encoding rate for each field/frame. The scaling factor can be chosen based on the encoding bit rate. For example, for a bit rate exceeding 5 MB, g = 1.0, for bit rates lower than 2 MB, g = 0.5, and for bit rates between 2-5 MB, g = 0.1666 + rate/6.0 MB. The scaling is based on the bit rate because the higher the encoding bit rate, the greater usefulness of the motion vectors.

Macroblocks 312 from Intrapictures 305 are not temporally predicted and will not include any motion vectors 312c. If the macroblock 312 is from an Intrapicture 305 (610), an examination is made (615) whether the macroblock was field coded or frame coded. If the macroblock was field coded, the deinterlacing coefficient is replaced (620) by an arbitrary high value, such as 0.75, while if the macroblock was frame coded, the deinterlacing coefficient is replaced (625) by an arbitrary low value, such as 0.25. If at 610, the macroblock is not from an intrapicture, the deinterlacing coefficient remains the scaled average of motion vectors associated with the macroblock.

It is noted that interfield motion is often spatially localized. Accordingly, high interfield motion in a macroblock increases the likelihood of interfield motion in a neighboring macroblock. Additionally, an isolated macroblock with a high average motion vector magnitude is preferably "smoothed" with respect to the neighboring macroblocks to lessen the motion vectors impact on the deinterlacing coefficient for the macroblock.

At 630 a linear combination of previously computed deinterlace coeffients for spatially neighboring macroblocks 312 is obtained. An exemplary computation of the average motion vectors for the neighboring macroblocks can include:

$$F = [dk1 + 3dk2 + 8dk5 + 3dk4 + dk3]/16$$

dk5 = dk as calculated at 605;
dk2 = dk for macroblock immediately above;
dk4 = " " " " "at immediate left
dk1 = " " " " "at upper-left
dk3 = " " " " "at upper-right

At 635, the median, M, of (dk1, dk2, dk3, dk4, dk5) is determined. At 640, the median M, calculated during 635 and the linear combination average motion vector, F, calculated during 630 are compared. Wherein M and F differ by more than a predetermined threshold, such as 0.5, M is selected as the deinterlacing coefficient at 645. In contrast, wherein M and F do not differ by a more than the predetermined threshold, F is selected as the deinterlacing coefficient.

The deinterlacing coefficient is then adjusted based on whether the macroblock was predicted from a macroblock in a frame, a top field, or a bottom field. Wherein the macroblock was predicted from a frame (650), the deinterlacing coefficient is decreased by 30% (655). Wherein the macroblock was predicted from a field, a determination 658 is made of the type of field of the macroblock and the type of field containing the macroblock from which the macroblock was predicted. Wherein the types of field do not match, e.g., a top field macroblock predicted from a bottom field macroblock, or a bottom field macroblock predicted from a top field macroblock, the deinterlacing coefficient is increased by 30% (660).

The purpose of the deinterlacing coefficient dk is to guide the deinterlacer in making more accurate decisions whether to use a spatial interpolation scheme (in the case of high motion in the area of the picture under scrutiny) or a spatio-temporal interpolation scheme (in the case of low motion in said area of scrutiny). A simple example of the latter scheme is simple field or frame repetition, while an example of the former scheme is simple linear interpolation. The deinterlacer can use either scheme, a combination of the two, or a combination of other schemes known to those skilled in the art, bearing in mind that it is the interpolation coefficient dk that guides the decision by the deinterlacer based on derived frame/field motion from the encoded bitstream.

At 665, the deinterlacing coefficient is provided to the deinterlacer. At 670, the deinterlacer compares the deinterlacing coefficient to a predetermined threshold. Wherein the deinterlacing coefficient is below the predetermined threshold, the deinterlacer selects the low motion deinterlacing scheme, which may involve adjacent field/frame (temporal) processing, including but not limited to field/frame repetition (675). Wherein the deinterlacing coefficient exceeds the predetermined coefficient, the deinterlacer selects the high motion deinterlacing scheme, which may involve same field/frame (spatial) processing, including but not limited to field/frame linear interpolation.

Some video sequences 105 include a 24 progressive frames per second film source. The 24 progressive frames per second film source can be converted to a 60 field per second video sequence by process known as 3:2 pull down. The 3:2 pull down conversion involves repeating fields of video at the correct discrete display times in order to produce three frames with no interfield motion and two frames with some interfield motion.

Referring now to FIGURE 7, there is illustrated a block diagram describing the 3:2 pull down process. The original video sequence 105 includes 24 progressive frames per second, F0...F4. Each progressive frame F0...F4 is broken down into a corresponding top field 205a and bottom field 205b. The top field 205a includes the odd numbered lines X from the progressive frames F0...F4. The bottom fields 205b include the even numbered lines O from the progressive frames F0...F4.

It is noted that breaking down the progressive frames F0...F4 into top fields 205a and bottom fields 205b results in 48 interlaced fields/second. To synchronize the 48 interlaced fields/second to a 60 interlaced field/second rate, a repeated field 205r is inserted after every fourth field. The repeated field 205r is repeated from the field which is two intervals prior to the repeated field 205r.

It is also noted that after each repeated field 205r, the ordering of the top fields 205a and bottom fields 205b must be reversed. Progressive frames F0, F1 are represented by a top field 205a from progressive frame F0, followed by a bottom field 205b generated from progressive frame F0, a top field generated from progressive frame F1, a bottom field generated from progressive frame F1, and repeated field 205r. Repeated field 205r is identical to the top field 205a generated from progressive frame F1. In contrast, progressive frames F2 and F3 are represented by a bottom field 205b from progressive frame F2, followed by a top field 205a generated from progressive frame F2, a bottom field 205b generated from progressive frame F3, a top field 205a generated from progressive frame F3, and repeated field 205r. Repeated field 205r is identical to the bottom field 205b generated from progressive frame F3.

As can be seen, progressive frames F0 and F1 display the top field 205a first, and the repeated field 205r is generated from a top field. In contrast, progressive frames F2 and F3 display the bottom field 205b first, and the repeated field 205r is generated from a bottom field.

The foregoing information is represented by two MPEG-2 parameters - the top field first (TFF) parameter and the repeat first field (RFF) parameter, which are encoded in the macroblocks 312 representing each progressive frame F0...F4.

The video sequence 105 of 30 interlaced frames/second is received by MPEG encoder 118 and transmitted as MPEG-2 packets 115 to the receiver 117. The receiver receives the MPEG-2 packets 115 at decoder 400. The decoder decodes the MPEG-2 packets and transmits the resulting video stream 105' to the deinterlacer 410. The syntactic information from MPEG-2 packets 115 is received at IPA 405. The IPA 405 transmits a deinterlacing coefficient to the deinterlacer 410. The IPA analyzer 405 transmits a zero for the deinterlacing coefficient for each of the interlaced frames except the repeated frame 205r. Transmission of a zero deinterlacing coefficient causes the deinterlacer to use the low motion (e.g. repeated field/frame) deinterlacing scheme for deinterlacing each of the interlaced frames. For each repeated field 205r, the deinterlacing coefficient is calculated, and the deinterlacer 410 deinterlaces the repeated field 205r, as described in FIGURE 6. The foregoing causes the deinterlacer 410 to select an appropriate deinterlacing scheme for deinterlacing repeated field 205r at the pixel level, but based on block level information obtained from the bitstream.

The IPA 405 detects repeated fields by examination of the RFF parameter. The RFF parameter is set for both the top fields 205a and bottom fields 205b immediately proceeding the repeated field 205r. The IPA 405 examines the RFF parameter, and wherein the RFF parameter is set for two consecutive fields, the IPA 405 calculates a deinterlacing coefficient for the next following field. Otherwise the IPA 405 sets the deinterlacing coefficient to zero.

Those skilled in the art will recognize that the foregoing embodiments provide a number of advantages over conventional approaches. For example, although the foregoing embodiments are shown with particular emphasis on the MPEG-2 standards, the embodiments can be applied to any bit stream coding standard that uses specific syntax elements to code interlaced content. Furthermore, such standards may use multiple motion vectors per macroblock and use blocks of various sizes as the basis for coding and reconstruction. Additionally, the some embodiments optimize utilization of the receiver resources while minimizing distortion. The modifications in certain embodiments only require the ability of the decoder to provide some of the syntactic elements in the video sequence. If the foregoing modification is not possible, an additional decoder function can be integrated with the IPA 405. There are no additional computational requirements of the decoder because the deinterlacing coefficient is based on information, such as the motion vector 312c, which is calculated and encoded prior to transmission over the communication channel. Additionally, the deinterlacing is completely transparent to the capturing and encoding of the video sequence. Therefore, no modifications or configurations need to be made outside of the receiver.

Although the embodiments described herein are described with a degree of particularity, it should be noted that changes, substitutions, and modifications can be made with respected to the embodiments without departing from the spirit and scope of the present application. For example, the flow diagram of FIGURE 6 can be implemented as a memory storing a plurality of executable instructions. Accordingly, the present application is only limited by the following claims and equivalents thereof.

**Claims**

1. A method for guiding a deinterlacer, said method comprising:

   examining (605) motion vector information for a portion of a field;
   calculating a parameter for the portion of the field, wherein the parameter is a function of the motion vector information, and wherein the parameter is indicative of interfield motion for the portion of the field comprising:

   computing (613) a magnitude for the motion vector information for the portion of the field;
   calculating (630) a linear combination of at least one parameter which is indicative of interfield motion for the portion of the field and at least one other parameter which is indicative of interfield motion for at least one other portion of the field; and wherein the method further comprises:

   providing (665) the parameter to a deinterlacer wherein the deinterlacer selects a scheme for deinterlacing the portion of the field based on the parameter.

2. The method of claim 1, wherein in said linear combination the at least one parameter is calculated as an average magnitude of all motion vectors stored in a motion vector field of a current macroblock and is weighted with a higher factor than at least two of said at least one other parameters which are calculated as an average magnitude of all motion vectors stored in a motion vector field of at least two neighboring macroblocks with respect to said current macroblock.

3. The method of claim 1, wherein the linear combination is calculated as $F = [dk1 + 3dk2 + 8dk5 + 3dk4 + dk3]/16$, wherein said at least one parameter comprises a parameter dk5 calculated as an average magnitude of all motion vectors stored in a motion vector field of a current macroblock,
   wherein said at least one other parameter comprises parameters dk1, dk2, dk3 and dk4,
   wherein said parameter dk1 is calculated as an average magnitude of all motion vectors stored in a motion vector field of a macroblock at the upper-left of the current macroblock;
   wherein said parameter dk2 is calculated as an average magnitude of all motion vectors stored in a motion vector field of a macroblock immediately above the current macroblock;
   wherein said parameter dk3 is calculated as an average magnitude of all motion vectors stored in a motion vector field of a macroblock at the upper-right of the current macroblock;
   wherein said parameter dk4 is calculated as an average magnitude of all motion vectors stored in a motion vector field of a macroblock at the immediate left of the current macroblock.

4. The method of claim 1, wherein calculating the parameter further comprises:

   calculating (635) a median from at least one parameter which is indicative of interfield motion for the portion of the field and at least one other parameter which is indicative of interfield motion for at least one other portion of the field.

5. The method of claim 1, said method comprising:

   detecting (610) whether a portion of a field is from an intrapicture;
   setting (625) a parameter to a first predetermined value, wherein the portion of the field is intraframe coded; and
   setting (620) the parameter to a second predetermined value, wherein the portion of the field is interfield coded.

6. A receiver for deinterlacing an input video sequence comprising a plurality of fields, said receiver comprising:

   a processor (405) for providing a parameter for a portion of one of said fields, said parameter indicative of interfield motion;

a deinterlacer (410) for selecting a deinterlacing scheme from a plurality of deinterlacing schemes based on said parameter and deinterlacing the portion of the field using the deinterlacing; and

a decoder (400) for receiving the portion of the field, and providing at least one motion vector associated with the portion of the field to the processor (405);

wherein the processor (405) is adapted to:

compute a magnitude for the at least one motion vector, and
calculate a linear combination of at least one parameter which is indicative of interfield motion for the portion of the field and at least one other parameter which is indicative of interfield motion for at least one other portion of the field.

7. A circuit for deinterlacing an input video sequence comprising a plurality of fields, said circuit comprising:

a processor (405);

a deinterlacer (410) connected to the processor, wherein the deinterlacer is adapted to receive a parameter indicative of interfield motion for a portion of a field from the processor and select a deinterlacing scheme from a plurality of deinterlacing schemes for portion of the field based on the parameter; and

a memory connected to the processor (405), said memory storing a plurality of instructions executable by the processor (405), wherein the instructions comprise means for calculating the parameter;

a decoder (400) connected to the processor (405), wherein the decoder (400) is adapted to receive the portion of the field, and provide at least one motion vector associated with the portion of the field to the processor (405); and

wherein the means for calculating the parameter further comprises means for:

computing a magnitude for the at least one motion vector associated with the portion of the field, and
calculating a linear combination of at least one parameter which is indicative of interfield motion for the portion of the field and at least one other parameter which is indicative of interfield motion for at least one other portion of the field.

## Patentansprüche

1. Verfahren zum Leiten einer Vorrichtung zur Zeilenentflechtung (Deinterlacer), wobei das Verfahren umfasst:

Überprüfen (605) von Bewegungsvektorinformationen für einen Abschnitt eines Felds;
Berechnen eines Parameters für den Abschnitt des Felds, wobei der Parameter eine Funktion der Bewegungsvektorinformationen ist, und wobei der Parameter Zwischenfeldbewegung für den Abschnitt des Felds angibt, mit:

Berechnen (613) einer Größe für die Bewegungsvektorinformationen für den Abschnitt des Felds;
Berechnen (630) einer linearen Kombination von wenigstens einem Parameter, der Zwischenfeldbewegung für den Abschnitt des Felds angibt, und wenigstens einem weiteren Parameter, der Zwischenfeldbewegung für wenigstens einen anderen Abschnitt des Felds angibt; und wobei das Verfahren des Weiteren umfasst:

Bereitstellen (665) des Parameters für einen Deinterlacer, wobei der Deinterlacer ein Schema zum Durchführen von Zeilenentflechtung des Abschnitts des Felds basierend auf dem Parameter auswählt.

2. Verfahren nach Anspruch 1, wobei in der linearen Kombination der wenigstens eine Parameter als Durchschnittsgröße aller Bewegungsvektoren berechnet wird, die in einem Bewegungsvektorfeld eines aktuellen Makroblocks gespeichert sind, und mit einem höheren Faktor gewichtet wird, als wenigstens zwei des wenigstens einen weiteren Parameters, die als Durchschnittsgröße aller Bewegungsvektoren berechnet werden, die in einem Bewegungsvektorfeld von wenigstens zwei in Bezug zu dem aktuellen Makroblock benachbarten Makroblöcken gespeichert sind.

3. Verfahren nach Anspruch 1, wobei die lineare Kombination berechnet wird als

$$F = [dk1 + 3dk2 + 8dk5 + 3dk4 + dk3]/16,$$

wobei der wenigstens eine Parameter einen Parameter dk5 aufweist, der als Durchschnittsgröße aller Bewegungsvektoren berechnet wird, die in einem Bewegungsvektorfeld eines aktuellen Makroblocks gespeichert sind,

wobei der wenigstens eine weitere Parameter die Parameter dk1, dk2, dk3 und dk4 aufweist,

wobei der Parameter dk1 als Durchschnittsgröße aller Bewegungsvektoren berechnet wird, die in einem Bewegungsvektorfeld eines Makroblocks links oben vom aktuellen Makroblock gespeichert sind;

wobei der Parameter dk2 als Durchschnittsgröße aller Bewegungsvektoren berechnet wird, die in einem Bewegungsvektorfeld eines Makroblocks unmittelbar über dem aktuellen Makroblock gespeichert sind;

wobei der Parameter dk3 als Durchschnittsgröße aller Bewegungsvektoren berechnet wird, die in einem Bewegungsvektorfeld eines Makroblocks rechts oben vom aktuellen Makroblock gespeichert sind;

wobei der Parameter dk4 als Durchschnittsgröße aller Bewegungsvektoren berechnet wird, die in einem Bewegungsvektorfeld eines Makroblocks unmittelbar links vom aktuellen Makroblock gespeichert sind.

4. Verfahren nach Anspruch 1, wobei das Berechnen des Parameters des Weiteren umfasst:

Berechnen (635) eines Mittelwerts aus wenigstens einem Parameter, der Zwischenfeldbewegung für den Abschnitt des Felds angibt, und wenigstens einem weiteren Parameter, der Zwischenfeldbewegung für wenigstens einen weiteren Abschnitt des Felds angibt.

5. Verfahren nach Anspruch 1, wobei das Verfahren umfasst:

Ermitteln (610), ob ein Abschnitt eines Felds aus einem Vollbild (Intra Picture) stammt;

Einstellen (625) eines Parameters auf einen ersten vorgegebenen Wert, wobei der Abschnitt des Felds vollbildcodiert ist; und

Einstellen (620) des Parameters auf einen zweiten vorgegebenen Wert, wobei der Abschnitt des Felds zwischenfeldcodiert ist.

6. Empfänger zum Durchführen von Zeilenentflechtung für eine Eingangsvideosequenz mit einer Vielzahl von Feldern, wobei der Empfänger aufweist:

einen Prozessor (405) zum Bereitstellen eines Parameters für einen Abschnitt von einem der Felder, wobei der Parameter Zwischenfeldbewegungen angibt;

einen Deinterlacer (410) zum Auswählen eines Zeilenentflechtungsschemas aus einer Vielzahl von Zeilenentflechtungsschemata basierend auf dem Parameter und Durchführen von Zeilenentflechtung für den Abschnitt des Felds unter Verwendung der Zeilenentflechtung; und

einen Decoder (400) zum Empfangen des Abschnitts des Felds und Bereitstellen wenigstens eines Bewegungsvektors, der mit dem Abschnitt des Felds assoziiert ist, für den Prozessor (405);

wobei der Prozessor (405) ausgelegt ist zum:

Berechnen einer Größe für den wenigstens einen Bewegungsvektor, und

Berechnen einer linearen Kombination von wenigstens einem Parameter, der Zwischenfeldbewegung für den Abschnitt des Felds angibt, und wenigstens einem weiteren Parameter, der Zwischenfeldbewegung für wenigstens einen anderen Abschnitt des Felds angibt.

7. Schaltung zum Durchführen von Zeilenentflechtung für eine Eingangsvideosequenz mit einer Vielzahl von Feldern, wobei die Schaltung aufweist:

einen Prozessor (405);

einen Deinterlacer (410), der mit dem Prozessor verbunden ist, wobei der Deinterlacer ausgelegt ist, um vom Prozessor einen Parameter zu empfangen, der Zwischenfeldbewegung für einen Abschnitt eines Felds angibt, und um ein Zeilenentflechtungsschema aus einer Vielzahl von Zeilenentflechtungsschemata für den Abschnitt des Felds basierend auf dem Parameter auszuwählen; und

einen Speicher, der mit dem Prozessor (405) verbunden ist, wobei der Speicher eine Vielzahl von Befehlen speichert, die von dem Prozessor (405) ausführbar sind, wobei die Befehle Mittel zum Berechnen des Parameters enthalten;

einen Decoder (400), der mit dem Prozessor (405) verbunden ist, wobei der Decoder (400) ausgelegt ist, um den Abschnitt des Felds zu empfangen und wenigstens einen Bewegungsvektor, der mit dem Abschnitt des Felds assoziiert ist, für den Prozessor (405) bereitzustellen; und

wobei die Einrichtung zum Berechnen des Parameters des Weiteren eine Einrichtung aufweist zum:

Berechnen einer Größe für den wenigstens einen Bewegungsvektor, der mit dem Abschnitt des Felds assoziiert ist, und

Berechnen einer linearen Kombination von wenigstens einem Parameter, der Zwischenfeldbewegung für den Abschnitt des Felds angibt, und wenigstens einem weiteren Parameter, der Zwischenfeldbewegung für wenigstens einen anderen Abschnitt des Felds angibt.

**Revendications**

1. Procédé de guidage d'un désentrelaceur, ledit procédé comprenant :

   l'examen (605) d'une information de vecteur de mouvement pour une partie d'un champ;
   le calcul d'un paramètre pour la partie du champ, dans lequel le paramètre est une fonction de l'information de vecteur de mouvement, et dans lequel le paramètre est indicatif de mouvement inter-champs pour la partie du champ comprenant :

   le calcul (613) d'une grandeur pour l'information de vecteur de mouvement pour la partie du champ ;
   le calcul (630) d'une combinaison linéaire d'au moins un paramètre qui est indicatif de mouvement inter-champs pour la partie du champ et d'au moins un autre paramètre qui est indicatif de mouvement inter-champs pour au moins une autre partie du champ ; et dans lequel le procédé comprend en outre :

   la fourniture (665) du paramètre à un désentrelaceur, dans lequel le désentrelaceur sélectionne un mécanisme pour désentrelacer la partie du champ sur la base du paramètre.

2. Procédé selon la revendication 1, dans lequel, dans ladite combinaison linéaire, l'au moins un paramètre est calculé comme une grandeur moyenne de tous les vecteurs de mouvement stockés dans un champ de vecteurs de mouvement d'un macrobloc courant et est pondéré avec un facteur supérieur à au moins deux dudit au moins un autre paramètre qui sont calculés comme une grandeur moyenne de tous les vecteurs de mouvement stockés dans un champ de vecteurs de mouvement d'au moins deux macroblocs voisins par rapport audit macrobloc courant.

3. Procédé selon la revendication 1, dans lequel la combinaison linéaire est calculée comme

$$F = [dk1 + 3dk2 + 8dk5 + 3dk4 + dk3]/16,$$

   dans lequel ledit au moins un paramètre comprend un paramètre dk5 calculé comme une grandeur moyenne de tous les vecteurs de mouvement stockés dans un champ de vecteurs de mouvement d'un macrobloc courant,
   dans lequel ledit au moins un autre paramètre comprend des paramètres dk1, dk2, dk3 et dk4,
   dans lequel ledit paramètre dk1 est calculé comme une grandeur moyenne de tous les vecteurs de mouvement stockés dans un champ de vecteurs de mouvement d'un macrobloc en haut à gauche du macrobloc courant ;
   dans lequel ledit paramètre dk2 est calculé comme une grandeur moyenne de tous les vecteurs de mouvement stockés dans un champ de vecteurs de mouvement d'un macrobloc immédiatement au-dessus du macrobloc courant ;
   dans lequel ledit paramètre dk3 est calculé comme une grandeur moyenne de tous les vecteurs de mouvement stockés dans un champ de vecteurs de mouvement d'un macrobloc en haut à droite du macrobloc courant ;
   dans lequel ledit paramètre dk4 est calculé comme une grandeur moyenne de tous les vecteurs de mouvement stockés dans un champ de vecteurs de mouvement d'un macrobloc à la gauche immédiate du macrobloc courant.

4. Procédé selon la revendication 1, dans lequel le calcul du paramètre comprend en outre :

   le calcul (635) d'une valeur médiane à partir d'au moins un paramètre qui est indicatif de mouvement inter-champs pour la partie du champ et d'au moins un autre paramètre qui est indicatif de mouvement inter-champs pour au moins une autre partie du champ.

5. Procédé selon la revendication 1, ledit procédé comprenant :

la détection (610) si une partie d'un champ provient d'une image de type 1;

la fixation (625) d'un paramètre à une première valeur prédéterminée, dans lequel la partie du champ est codée intra-trame ; et

la fixation (620) du paramètre à une deuxième valeur prédéterminée, dans lequel la partie du champ est codée inter-champs.

6. Récepteur pour désentrelacer une séquence vidéo d'entrée comprenant une pluralité de champs, ledit récepteur comprenant :

un processeur (405) pour fournir un paramètre pour une partie d'un desdits champs, ledit paramètre indicatif de mouvement inter-champs ;

un désentrelaceur (410) pour sélectionner un mécanisme de désentrelacement parmi une pluralité de mécanismes de désentrelacement sur la base dudit paramètre et désentrelacer la partie du champ en utilisant le désentrelacement ; et

un décodeur (400) pour recevoir la partie du champ, et fournir au moins un vecteur de mouvement associé avec la partie du champ au processeur (405) ;

dans lequel le processeur (405) est adapté à :

calculer une grandeur pour l'au moins un vecteur de mouvement, et

calculer une combinaison linéaire d'au moins un paramètre qui est indicatif de mouvement inter-champs pour la partie du champ et d'au moins un autre paramètre qui est indicatif de mouvement inter-champs pour au moins une autre partie du champ.

7. Circuit pour désentrelacer une séquence vidéo d'entrée comprenant une pluralité de champs, ledit circuit comprenant :

un processeur (405) ;

un désentrelaceur (410) connecté au processeur, dans lequel le désentrelaceur est adapté à recevoir un paramètre indicatif de mouvement inter-champs pour une partie d'un champ provenant du processeur et à sélectionner un mécanisme de désentrelacement parmi une pluralité de mécanismes de désentrelacement pour la partie du champ sur la base du paramètre ; et

une mémoire connectée au processeur (405), ladite mémoire stockant une pluralité d'instructions exécutables par le processeur (405), dans lequel les instructions comprennent un moyen pour calculer le paramètre ;

un décodeur (400) connecté au processeur (405), dans lequel le décodeur (400) est adapté à recevoir la partie du champ, et à fournir au moins un vecteur de mouvement associé avec la partie du champ au processeur (405) ; et

dans lequel le moyen pour calculer le paramètre comprend en outre un moyen pour :

calculer une grandeur pour l'au moins un vecteur de mouvement associé avec la partie du champ, et

calculer une combinaison linéaire d'au moins un paramètre qui est indicatif de mouvement inter-champs pour la partie du champ et d'au moins un autre paramètre qui est indicatif de mouvement inter-champs pour au moins une autre partie du champ.

FIGURE 1

Video
Sequenz 105 → MPEG
Encoder 118

MPEG-2
115 →

125

Reciever 117

110

EP 1 418 754 B1

interlaced frame

progressive frame

**FIGURE 2**

EP 1 418 754 B1

302    305    Video Sequenz
Group of Pictures

Picture    Slice    310b    Block

305    Macroblock    8 Pixel

315    310a    310

312    8 Pixel

Cb    305c
Y    Cr    305b

305a    310c

305

FIGURE 3

EP 1 418 754 B1

105

| Seq | Seq | . . . . | Seq |
|-----|-----|---------|-----|

302

| Seq SC | Video Params | Bitstream Params | QTs Misc | GOP | . . . . | GOP |
|--------|--------------|------------------|----------|-----|---------|-----|

Group of Pictures

305

| GOP SC | Time Code | GOP Params | Pict | | . . . . | Pict |
|--------|-----------|------------|------|--|---------|------|

Pictures

315

| PSC | Type | Buffer Params | Encode Params | Slice | . . . . | Slice |
|-----|------|---------------|---------------|-------|---------|-------|

Slice

312

| SSC | Vert Pos | Qscale | MB | | . . . . | MB |
|-----|----------|--------|----|--|---------|----|

Makroblock

| Addr lacr | Type | Motion Vector | Qscale | CBP | bC | . . . . | bS |
|-----------|------|---------------|--------|-----|----|---------|-----|

Block

312e  312d  312c  312b  312a

**FIGURE 3**

FIGURE 4

EP 1 418 754 B1

Fields

TOP    BOTTOM

205a   205b   205a   205b . . . . . . . . . . . . . . . . .

x        x        x      x
   o        o        o        o
x        x        x      x
   o        o        o        o
x        x        x      x
   o        o        o        o
x        x        x      x
   o        o        o        o
x        x        x      x
   o        o        o        o
x        x        x      x
   o        o        o        o
x        x        x      x
   o        o        o        o
x        x        x      x
   o        o        o        o
x        x        x      x
   o        o        o        o

⟷                    ⟷

n      n+1      n      n+1     n-1     n     n+1    n+2

Source
Video
Fields

205p(1) 205p(1)   205p(2)  205p(2)   205p(3)   205p(3)

FRAME
REPEAT

SPATIAL
INTER-
POLATION

SPATIAL / TEMPORAL
INTERPOLATION

Deinterlaced
Frames
[ 2x lines per
Sampling
period ]

## FIGURE 5

**FIGURE 6**

605

610 — Block Field/Frame Coded? 615

no → dk = scaled avg Of |mv| Associated with Block 712  613  dk5=dk

yes → dk = Arbitrarily HIGH value 620  dk5=dk

dk = Arbitrarily LOW value 625  dk5=dk

630 — Calculate linear Combination of spatially Neighboring dk values (F)

$$F = \frac{dk1 + dk2 + dk3 + dk4 + dk5}{16}$$

635 — Determine median Of spatially neighboring dk values (m)

$$m = Median\ (dk_1,\ dk_2,\ dk_3,\ dk_4,\ dk_5)$$

640 — |F-m| > T ?

No → Select F 645

yes → Select m

Predicted From FRM ? 650

No

yes

665

670

yes → Select Temporal Temporal Scheme

No

END

Progressive FILM FRAMES (original)

Interlaced Frames

Progressive Video FRAMES

EP 1 418 754 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6348949 B1
- US 6269484 B1
- EP 1211644 A1
- WO 1164792 A2